# EUROPEAN PATENT APPLICATION

(11) **EP 4 546 864 A1**
(43) Date of publication of application: **30.04.2025**
(21) Application number: 22947447.3
(22) Date of filing: 24.06.2022
(51) Int. Cl.: H04W 28/06

(54) **ORBITAL ANGULAR MOMENTUM-BASED UPLINK TRANSMISSION CONFIGURATION METHOD, APPARATUS, AND SYSTEM**

(71) Applicant: Beijing Xiaomi Mobile Software Co., Ltd., Beijing 100085 (CN)
(72) Inventor: CHI, Liangang, Beijing 100085 (CN); DUAN, Gaoming, Beijing 100085 (CN)
(74) Representative: Gunzelmann, Rainer
(86) International application number: PCT/CN2022/101329
(87) International publication number: WO 2023/245681

(57) **Abstract**

An orbital angular momentum (OAM)-based uplink transmission configuration method, apparatus, and system, relating to the technical field of mobile communications. The OAM -based uplink transmission configuration method comprises: a first device determines configuration information of an uplink measurement reference signal of a second device according to capability information of the second device, and sends the configuration information of the uplink measurement reference signal, wherein the configuration information comprises at least one of the following: an OAM mode value of the uplink measurement reference signal, and an antenna port corresponding to the OAM mode value. The OAM-based uplink transmission configuration method provides an uplink transmission configuration solution suitable for an OAM communication scenario, and effectively solves problems of resource configuration and mapping in uplink transmission.

## Description

### TECHNICAL FIELD

The present disclosure relates to the field of mobile communication technologies, and particularly to a method and an apparatus for configuring uplink transmission based on orbital angular momentum (OAM), and a system.

### BACKGROUND

With the continuous evolution of mobile network communication technologies, various application scenarios have higher requirements on network communication rate, delay, bandwidth, and other capabilities. Because an electromagnetic beam carrying orbital angular momentum (OAM) has an infinite variety of modes and the modes are mutually orthogonal to each other, mode division multiplexing can be realized to improve spectral efficiency and channel capacity. However, the problem of uplink transmission configuration has not yet been solved in the communication based on OAM.

### SUMMARY

The present disclosure provides a method and an apparatus for configuring uplink transmission based on orbital angular momentum (OAM), and a system, and provides a method for configuring uplink transmission suitable for OAM communication scenarios, which effectively solves problems of resource configuration and mapping of a reference signal in uplink transmission.

According to a first aspect of embodiments of the present disclosure, there is provided a method for configuring uplink transmission based on OAM. The method is performed by a first device, and includes: determining configuration information of an uplink measurement reference signal of a second device based on capability information of the second device, in which the configuration information includes at least one of an OAM modal value of the uplink measurement reference signal, or an antenna port corresponding to the OAM modal value; and sending the configuration information of the uplink measurement reference signal to the second device.

In some embodiments of the present disclosure, the method further includes: receiving the capability information of the second device, in which the capability information includes a maximum sending OAM mode number supported by the second device, and/or an identifier of each OAM mode.

In some embodiments of the present disclosure, the OAM modal value of the uplink measurement reference signal includes: an identifier of an OAM mode, in which the identifier is obtained from the capability information of the second device; and/or an index of a mode set formed by two or more OAM modes.

In some embodiments of the present disclosure, the configuration information of the uplink measurement reference signal also includes time-frequency resource information and a sending mode of the uplink measurement reference signal, in which the time-frequency resource information and the sending mode are configured by the first device or determined according to a communication protocol between the first device and the second device.

In some embodiments of the present disclosure, the sending mode includes a cyclical sending mode, a semi-cyclical sending mode, or a non-cyclical sending mode, in which the cyclical sending mode is sending by the second device at a predetermined cycle, the semi-cyclical sending mode is sending by the second device at a predetermined cycle after receiving an activation signaling sent by the first device; and the non-cyclical sending mode is sending once by the second device in response to an activation signaling sent by the first device.

In some embodiments of the present disclosure, the method further includes: receiving the uplink measurement reference signal sent by the second device; measuring the uplink measurement reference signal; and determining configuration information of an uplink data channel of the second device and configuration information of a demodulation reference signal (DMRS) of the uplink data channel of the second device according to the measuring result.

In some embodiments of the present disclosure, measuring the uplink measurement reference signal includes: calculating channel information of the uplink measurement reference signal, in which the channel information includes at least one of a signal to interference plus noise ratio (SINR), a reference signal receiving power (RSRP), a reference signal receiving quality (RSRQ), or a received signal strength indication (RSSI).

In some embodiments of the present disclosure, determining the configuration information of the uplink data channel of the second device and the configuration information of the DMRS of the uplink data channel of the second device according to the measuring result includes: using configuration information corresponding to the uplink measurement reference signal whose measuring result meet a communication condition as the configuration information of the uplink data channel of the second device and the configuration information of the DMRS of the uplink data channel of the second device; and the method further includes: sending the configuration information of the uplink data channel of the second device and the configuration information of the DMRS of the uplink data channel of the second device to the second device.

According to a second aspect of embodiments of the present disclosure, there is provided a method for configuring uplink transmission based on OAM. The method is performed by a second device, and includes: sending an uplink measurement reference signal according to configuration information of the uplink measurement reference signal, in which the configuration information of the uplink measurement reference signal includes at least one of: an OAM modal value of the uplink measurement reference signal; or an antenna port corresponding to the OAM modal value.

In some embodiments of the present disclosure, the configuration information of the uplink measurement reference signal also includes time-frequency resource information and a sending mode of the uplink measurement reference signal, and before sending the uplink measurement reference signal according to the configuration information of the uplink measurement reference signal, the method further includes: receiving the configuration information of the uplink measurement reference signal sent by a first device.

In some embodiments of the present disclosure, the configuration information of the uplink measurement reference signal further includes time-frequency resource information and a sending mode of the uplink measurement reference signal, and before sending the uplink measurement reference signal according to the configuration information of the uplink measurement reference signal, the method further includes: receiving an OAM modal value of the uplink measurement reference signal sent by the first device, and/or an antenna port corresponding to the OAM modal value; and determining the time-frequency resource information and the sending mode of the uplink measurement reference signal according to a communication protocol between the first device and the second device.

In some embodiments of the present disclosure, the sending mode includes a cyclical sending mode, or a semi-cyclical sending mode, or a non-cyclical sending mode, in which the cyclical sending mode is sending by the second device at a predetermined cycle, the semi-cyclical sending mode is sending by the second device at a predetermined cycle after receiving an activation signaling sent by the first device; and the non-cyclical sending mode is sending once by the second device in response to an activation signaling sent by the first device.

In some embodiments of the present disclosure, before sending the uplink measurement reference signal according to the configuration information of the uplink measurement reference signal, the method further includes: sending capability information to the first device, in which the capability information is used to assist the first device in determining the configuration information of the uplink measurement reference signal, and the capability information includes a maximum sending OAM mode number supported by the second device, and/or an identifier of each OAM mode.

In some embodiments of the present disclosure, the method further includes: receiving configuration information of an uplink data channel and configuration information of a DMRS of the uplink data channel, in which the configuration information of the uplink data channel and the configuration information of the DMRS of the uplink data channel are determined based on a measuring result of the uplink measurement reference signal.

According to a third aspect of embodiments of the present disclosure, there is provided an apparatus for configuring uplink transmission based on OAM. The apparatus is applied to a first device, and includes: a determining unit, configured to determine configuration information of an uplink measurement reference signal of a second device based on capability information of the second device, in which the configuration information includes at least one of: an OAM modal value of the uplink measurement reference signal; or an antenna port corresponding to the OAM modal value; and a sending unit, configured to send the configuration information of the uplink measurement reference signal to the second device.

According to a fourth aspect of embodiments of the present disclosure, there is provided an apparatus for configuring uplink transmission based on OAM. The apparatus is applied to a second device, and includes: a sending unit, configured to send an uplink measurement reference signal according to configuration information of the uplink measurement reference signal, in which the configuration information of the uplink measurement reference signal includes at least one of: an OAM modal value of the uplink measurement reference signal; or an antenna port corresponding to the OAM modal value.

According to a fifth aspect of embodiments of the present disclosure, a communication system is provided. The system includes a first device and a second device. The first device determines configuration information of an uplink measurement reference signal of the second device based on capability information of the second device, in which the configuration information includes at least one of: an OAM modal value of the uplink measurement reference signal, or an antenna port corresponding to the OAM modal value. The first device sends the configuration information of the uplink measurement reference signal to the second device. The second device sends the uplink measurement reference signal according to the configuration information of the uplink measurement reference signal.

According to a sixth aspect of embodiments of the present disclosure, a communication device is provided. The communication device includes a transceiver; a memory; and a processor for respectively connecting with the transceiver and with the memory. When the processor is configured to control a wireless signal receiving and sending of the transceiver by executing computer-executable instructions on the memory, to implement the method according to the first aspect or the second aspect of the embodiments of the present disclosure.

According to a seventh aspect of embodiments of the present disclosure, a computer storage medium is provided. The computer storage medium for storing computer executable instructions. When the computer executable instructions are executed by a processor, the method according to the first aspect or the second aspect of the embodiments of the present disclosure is implemented.

According to a method for configuring uplink transmission based on OAM in the present disclosure, the first device can determine configuration information of an uplink measurement reference signal of a second device based on capability information of the second device, in which the configuration information includes at least one of an OAM modal value of the uplink measurement reference signal or an antenna port corresponding to the OAM modal value; and send the configuration information of the uplink measurement reference signal to the second device. This provides a method for configuring uplink transmission suitable for OAM communication scenarios, effectively solving problems of resource configuration and mapping in uplink transmission.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

The above and other aspects and advantages of embodiments of the present disclosure will become apparent and more readily appreciated from the following descriptions made with reference to the accompanying drawings.
FIG 1 is a flowchart of a method for configuring uplink transmission based on orbital angular momentum (OAM) according to an embodiment of the present disclosure.
FIG 2 is a flowchart of a method for configuring uplink transmission based on OAM according to an embodiment of the present disclosure.
FIG 3 is a flowchart of a method for configuring uplink transmission based on OAM according to an embodiment of the present disclosure.
FIG 4 is a flowchart of a method for configuring uplink transmission based on OAM according to an embodiment of the present disclosure.
FIG 5 is a flowchart of a method for configuring uplink transmission based on OAM according to an embodiment of the present disclosure.
FIG 6 is a schematic diagram of a signaling interaction of a method for configuring uplink transmission based on OAM according to an embodiment of the present disclosure.
FIG 7 is a block diagram of an apparatus for configuring uplink transmission based on OAM according to an embodiment of the present disclosure.
FIG 8 is a block diagram of an apparatus for configuring uplink transmission based on OAM according to an embodiment of the present disclosure.
FIG 9 is a block diagram of an apparatus for configuring uplink transmission based on OAM according to an embodiment of the present disclosure.
FIG 10 is a block diagram of an apparatus for configuring uplink transmission based on OAM according to an embodiment of the present disclosure.
FIG 11 is a block diagram of a communication device according to an embodiment of the present disclosure.
FIG 12 is a block diagram of a chip according to an embodiment of the present disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The embodiments described below with reference to the attached drawings are illustrative with the aim to interpret the present disclosure and should not be construed as a limitation of the present disclosure.

The boundary of mobile network communication technology is constantly expanding in application scenarios in real life, such as future-oriented augmented reality (AR) and virtual reality (VR), and the emergence of more new Internet application scenarios (such as Internet of Vehicles, Internet of Things, etc.). Various application scenarios have higher requirements on network communication rate, delay, bandwidth, and other capabilities. In order to meet the requirements, more and more high-frequency bands, for example, millimeter wave and terahertz wave band are developed. However, as a limited resource, spectrum is in a shortage. Therefore, in addition to the development of higher frequency bands, the search for higher spectral efficiency of the communication technology has become a priority.

With the emergence of the concept of vortex electromagnetic wave, associating the vortex electromagnetic wave with orbital angular momentum (OAM) greatly expands the limitation of the modulation dimension in traditional technology. At present, there are mainly two ways to send information using OAM: OAM-Shift Keying (OAM-SK) and OAM-Division Multiplexing (OAM-DM). For any one of the ways, theoretically, there are infinite OAM modes carried by the vortex electromagnetic wave, and OAM beams with different integer eigenvalues are mutually orthogonal, which can theoretically improve the spectral efficiency infinitely. In other words, the electromagnetic beam carrying OAM has infinite variety of modes and the modes are mutually orthogonal to each other, which endows the OAM communication with characteristics of simple generation and demodulation, simple reception demodulation algorithm, infinite variety of modes and ultra-high spectral efficiency. Therefore, the mode division multiplexing can be realized to improve spectral efficiency and channel capacity, so as to solve the problem of low detection efficiency of the detection system.

A typical application is OAM communication based on uniform circular array (UCA). In this system, uplink reference signals need to be sent before the uplink transmission, which is used to obtain uplink channel information, satisfy a channel reciprocity, obtain a downlink channel, and manage an uplink beam. However, in related art, a transmission configuration is based on multiple input multiple output (MIMO) square matrix, and the problem of uplink transmission configuration has not been solved in the current OAM-based communication.

Therefore, a method and an apparatus for configuring uplink transmission based on OAM, and a system are provided, which can effectively solve problems of resource allocation of a reference signal and mapping between an antenna port and an OAM mode in uplink channel transmission.

It is understood that the solution in the present disclosure can be used for the fifth generation (5G) and beyond communication technologies, such as the evolution of 5G (5G-Advanced) and the sixth generation mobile communication technology (6G), etc., which are not limited in the present disclosure.

A method for configuring uplink transmission based on OAM in the present disclosure is described in detail in combination with the attached drawings.

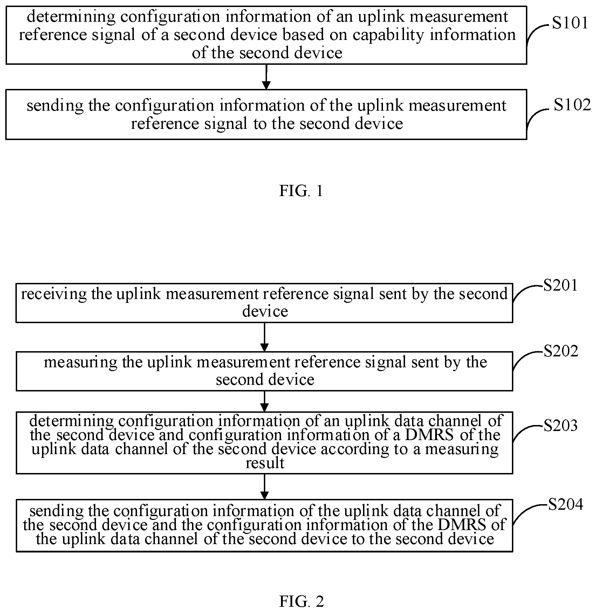

FIG 1 is a flowchart of a method for configuring uplink transmission based on OAM according to an embodiment of the present disclosure. As shown in FIG 1, the method is performed by a first device. In an embodiment of the present disclosure, the first device is a network device, specifically a base station.

The method may include the following steps.

At S101, configuration information of an uplink measurement reference signal of a second device is determined based on capability information of the second device.

In an embodiment of the present disclosure, the second device may be a network device, such as a relay or a smart repeater, including but not limited to a network-controlled repeater (NCR).

In an embodiment of the present disclosure, the second device may also be a user equipment (UE), including but not limited to an intelligent terminal, a cellular phone, a wireless device, a handset, a mobile unit, a vehicle, an on-board device, etc.

In the present disclosure, the configuration information of the uplink measurement reference signal of the second device includes at least one of: an OAM modal value of the uplink measurement reference signal; or an antenna port corresponding to the OAM modal value.

It is understood that, in the present disclosure, configuring the uplink measurement reference signal between the first device and the second device may include two ways. In the first way, there is an association or binding relationship between the OAM modal value and the antenna port, in which the association or binding relationship is agreed in advance or configured in advance. In this case, the configuration information of the uplink measurement reference signal may include one of the OAM modal value and the antenna port. In the second way, the OAM modal value is not bound to the antenna port in advance, and the configuration information of the uplink measurement reference signal includes the OAM modal value and the antenna port. It should be noted that there is a one-to-one correspondence relationship between the antenna port and the OAM modal value.

At S102, the configuration information of the uplink measurement reference signal is sent to the second device.

In an embodiment of the present disclosure, the first device may send the determined configuration information of the uplink measurement reference signal to the second device to assist the second device in generating a sending beam of the uplink measurement reference signal, so as to send the uplink measurement reference signal.

In summary, according to the method for configuring uplink transmission based on OAM in the present disclosure, the first device can determine configuration information of the uplink measurement reference signal of the second device based on capability information of the second device, in which the configuration information includes at least one of an OAM modal value of the uplink measurement reference signal, or an antenna port corresponding to the OAM modal value; and send the configuration information of the uplink measurement reference signal to the second device. This provides the method for configuring uplink transmission suitable for OAM communication scenarios, effectively solving problems of resource allocation and mapping in uplink transmission.

FIG 2 is a flowchart of a method for configuring uplink transmission based on OAM according to an embodiment of the present disclosure. The method is applied to a first device. Based on the embodiment shown in FIG 1, as shown in FIG 2, the method may include the following steps.

At S201, the uplink measurement reference signal sent by the second device is received.

In an embodiment of the present disclosure, the first device may receive the uplink measurement reference signal sent by the second device and perform subsequent processing.

At S202, the uplink measurement reference signal sent by the second device is measured.

In an optional embodiment, the uplink measurement reference signal may be generated by the second device based on the configuration information of the uplink measurement reference signal. In an optional embodiment, the configuration information of the uplink measurement reference signal may be configured by the first device.

For example, the first device measures the uplink measurement reference signal sent by the second device, obtains the measuring result, and determines configuration information of an uplink data channel of the second device and configuration information of a demodulation reference signal (DMRS) of the uplink data channel of the second device according to the measuring result.

Specifically, in the embodiments of the present disclosure, the first device receives the uplink measurement reference signal sent by the second device, and measures the channel information of the uplink measurement reference signal as the measuring result. The channel information can represent quality of the uplink measurement reference signal, including but not limited to: a signal and interference plus noise ratio (SINR), a reference signal received power (RSRP), a reference signal receiving quality (RSRQ), a received signal strength indication (RSSI), or any other parameters that can measure signal quality, which is not limited in the present disclosure.

At S203, configuration information of an uplink data channel of the second device and configuration information of a DMRS of the uplink data channel of the second device are determined according to the measuring result.

In the embodiments of the present disclosure, the first device can determine the configuration information of the uplink data channel of the second device and the configuration information of the DMRS of the uplink data channel of the second device based on the measuring result obtained by measuring the uplink measurement reference signal.

In a specific implementation, the first device may use configuration information corresponding to the uplink measurement reference signal whose measuring result meet a communication condition as the configuration information of the uplink data channel of the second device and the configuration information of the DMRS of the uplink data channel of the second device.

For example, the first device may screen according to a channel capacity maximization principle, or select the antenna port and/or the OAM mode corresponding to the uplink measurement reference signal with a better measuring result as the configuration information of the uplink data channel of the second device and the configuration information of the DMRS of the uplink data channel of the second device. The specific manner in which the first device determines the configuration information of the uplink data channel of the second device and the configuration information of the DMRS of the uplink data channel of the second device based on the measuring result is not limited in the present disclosure.

At S204, the configuration information of the uplink data channel of the second device and the configuration information of the DMRS of the uplink data channel of the second device are sent to the second device.

In the present disclosure, the first device sends the configuration information of the uplink data channel of the second device and the configuration information of the DMRS of the uplink data channel of the second device to the second device, so that the second device can perform uplink transmission of signal or data according to the configuration information, thus completing the uplink transmission configuration of the OAM communication system.

In summary, according to the method for configuring uplink transmission based on OAM in the present disclosure, the first device can receive the uplink measurement reference signal sent by the second device, measure the uplink measurement reference signal, determine the configuration information of the uplink data channel and the configuration information of the DMRS of the uplink data channel according to the measuring result, and send the measuring result to the second device. In this way, the uplink transmission suitable for OAM communication scenarios is completed, problems of resource configuration and mapping in uplink transmission are effectively solved, and an alternative solution is provided to enhance the applicability.

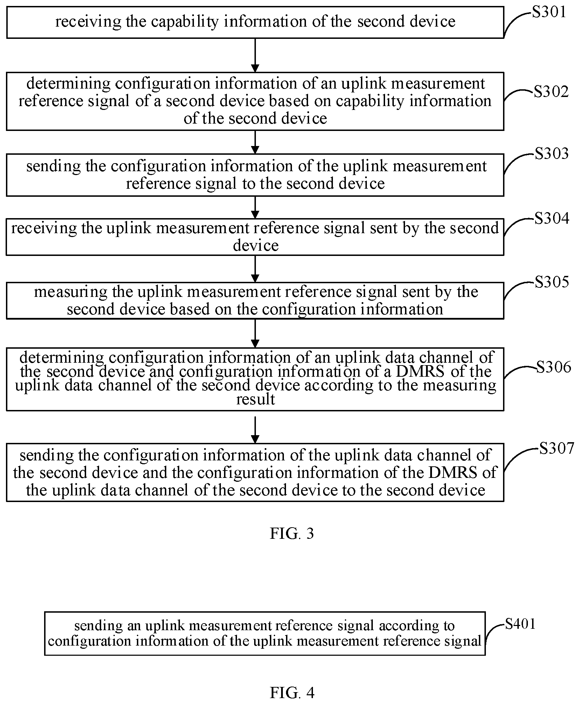

FIG 3 is a flowchart of a method for configuring uplink transmission based on OAM according to an embodiment of the present disclosure. The method is applied to a first device. Based on the embodiments shown in FIG 1 and FIG 2, as shown in FIG 3, the method may include the following steps.

At S301, the capability information of the second device is received.

In an embodiment of the present disclosure, the capability information includes a maximum sending OAM mode number supported by the second device, and/or an identifier of each OAM mode.

It is understood that the maximum sending OAM mode number supported by the second device is related to a hardware configuration of the second device, and specifically related to an antenna element number of the second device. For example, if the second device is configured with 8 antenna elements, the maximum sending OAM mode number supported by the second device is 8.

In addition, the capability information of the second device may also include identifiers of respective modes supported by the second device, for example, the modes are numbered in integers. In the above example, numbers of 8 OAM modes may be integers from 1 to 8. The identifier is used to uniquely indicate the OAM mode, and the size or order of the identifiers does not limit the modes.

At S302, configuration information of an uplink measurement reference signal of a second device is determined based on capability information of the second device.

In an embodiment of the present disclosure, the first device may determine the configuration information of the uplink measurement signal of the second device based on the received capability information of the second device.

For example, after receiving the capability information, the first device may configure the configuration information of the uplink measurement reference signal based on a current schedulable mode. The first device may also configure based on a current communication environment state in each mode, which is not limited in the present disclosure.

In an embodiment of the present disclosure, the OAM modal value of the uplink measurement reference signal includes: an identifier of an OAM mode, in which the identifier is obtained from the capability information of the second device; and/or an index of a mode set formed by two or more OAM modes.

In other words, the first device may configure the uplink measurement reference signal in various forms. The first device may directly select an identifier of a certain OAM mode as an OAM modal value, or integrate multiple OAM modes as a set, configure an index for the set, and use the index as a modal value of the mode set. The multiple OAM modes included in the set still correspond to their own identifiers. For example, the capability information reported by the second device is 8 OAM modes, and the first device determines the schedulable OAM modes including 6 modes with identifiers from 1 to 6, and configures the uplink measurement reference signal, such as configuring OAM modes with identifiers from 1 to 3, and integrating modes with identifiers from 4 to 6 as a mode set and configuring an index as 001.

In some optional embodiments, the configuration information of the uplink measurement reference signal also includes time-frequency resource information and a sending mode of the uplink measurement reference signal.

The time-frequency resource information includes a time domain location and a frequency domain location. The time domain location represents a time when a signal is sent, which may be indicated by, for example, a sending cycle, an offset position within a cycle, and a indicated time unit may be a time slot or an orthogonal frequency division multiplexing (OFDM) symbol. The frequency domain location represents a resource block (RB) or a subcarrier set where an antenna port is located.

The sending mode includes a cyclical sending mode, a semi-cyclical sending mode, or a non-cyclical sending mode. The cyclical sending mode is sending by the second device at a predetermined cycle, that is, the second device sends the signal periodically according to a parameter. The semi-cyclical sending mode is sending by the second device at a predetermined cycle after receiving an activation signaling sent by the first device, that is, the second device sends a signal periodically in response to receiving an activation signaling of a semi-cyclical uplink reference signal resource, which adds a trigger condition for the cyclical transmission. The non-cyclical sending mode is sending once by the second device in response to an activation signaling sent by the first device, that is, the second device sends once in response to an activation signaling of the uplink reference signal, and does not send at other times.

In the present disclosure, the using of the sending mode depends on specific requirements of the uplink transmission. For example, when the uplink transmission is relatively dense, the uplink measurement reference signal is also relatively dense, and the cyclical sending mode can be used. If there are few uplink transmission tasks, cyclical transmission will waste transmission resources, and the semi-cyclical sending mode or the non-cyclical sending mode may be used. The cycle values in the cyclical sending mode and in the semi-cyclical sending mode depend on a frame structure, which are not specifically limited in the present disclosure.

It is worth noting that, in the present disclosure, the time-frequency resource information and the sending mode are configured by the first device or determined according to a communication protocol between the first device and the second device.

Specifically, the time-frequency resource information and the sending mode of the uplink measurement reference signal may be configured by the first device. The first device may configure the time-frequency resource information and the sending mode of the uplink measurement reference signal by considering a busy degree of a moment, an interference factor or a transmission requirements described above, so its flexibility is high.

In an optional embodiment, the time-frequency resource information and the sending mode of the uplink measurement reference signal may be determined according to a communication protocol between the first device and the second device. For example, a time-frequency pattern and a sending mode of the antenna port of the uplink reference signal are agreed, then the first device is not required to further configure or to perform a subsequent signaling interaction, saving the processing capacity of the first device and simplifying the communication process.

At S303, the configuration information of the uplink measurement reference signal is sent to the second device.

In the present disclosure, the configuration information of the uplink measurement reference signal is configured to assist the second device in generating a sending beam of the uplink measurement reference signal, so as to send the uplink measurement reference signal.

In an implementation, the first device may inform the second device of the configuration information of the uplink measurement reference signal by a signaling, for example, a radio resource control (RRC) signaling, a media access control (MAC) signaling, or a physical layer signaling (such as a downlink control information (DCI) signaling). The type of the signaling is not limited in the present disclosure. The configuration information includes at least one of:
a) an OAM mode set (and/or its index) of the uplink measurement reference signal, that is, the OAM modal value configured by the first device; or
b) an antenna port set (and/or its index) of the uplink measurement reference signal, that is, the antenna port corresponding to the OAM modal value configured by the first device.

In addition, if the time-frequency resource information and the sending mode of the uplink measurement reference signal are configured by the first device, the configuration information also includes:
c) a time-frequency location occupied by the uplink measurement reference signal and a sending mode of the uplink measurement reference signal.

If the time-frequency resource information and the sending mode are agreed via a protocol, the configuration information of the uplink measurement reference signal sent by the first device to the second device does not include the above c).

It is understood that that, after receiving the configuration information sent by the first device, the second device can, according to the configuration information, determines which port for sending the beam, how much time-frequency resources are occupied, and in which way to send the beam. That is, the relay can use a specified antenna port on a specified time-frequency resource to send the uplink measurement reference signal in a specified transmission mode.

At S304, the uplink measurement reference signal sent by the second device is received.

In an embodiment of the present disclosure, the second device may generate a sending beam of the uplink measurement reference signal based on the configuration information sent by the first device, thereby sending the uplink measurement reference signal. The first device may receive the uplink measurement reference signal and perform subsequent processing.

At S305, the uplink measurement reference signal sent by the second device based on the configuration information is measured.

The first device measures the uplink measurement reference signal sent by the second device, obtains the measuring result, and determines the configuration information of the uplink data channel of the second device and the configuration information of the DMRS of the uplink data channel of the second device according to the measuring result.

Specifically, in an embodiment of the present disclosure, the first device receives the uplink measurement reference signal sent by the second device, and measures the channel information of the uplink measurement reference signal as the measuring result. The channel information may represent the quality of the uplink measurement reference signal, including but not limited to: an SINR, an RSRP, an RSRQ, an RSSI, or any other parameter that can measure signal quality, which is not limited in the present disclosure.

At S306, configuration information of an uplink data channel of the second device and configuration information of a DMRS of the uplink data channel of the second device are determined according to a measuring result.

**In** an embodiment of the present disclosure, the first device may determine the configuration information of the uplink data channel of the second device and the configuration information of the DMRS of the uplink data channel of the second device based on the measuring result obtained by measuring the uplink measurement reference signal.

**In** a specific implementation, the first device may use configuration information corresponding to the uplink measurement reference signal whose measuring result meet a communication condition as the configuration information of the uplink data channel of the second device and the configuration information of the DMRS of the uplink data channel of the second device.

For example, the first device may screen according to a channel capacity maximization principle, or select the antenna port and/or the OAM mode corresponding to the uplink measurement reference signal with a better measuring result as the configuration information of the uplink data channel of the second device and the configuration information of the DMRS of the uplink data channel of the second device. The specific manner in which the first device determines the configuration information of the uplink data channel of the second device and the configuration information of the DMRS of the uplink data channel of the second device based on the measuring result is not limited in the present disclosure.

At S307, the configuration information of the uplink data channel of the second device and the configuration information of the DMRS of the uplink data channel of the second device are sent to the second device.

In the present disclosure, the first device sends the configuration information of the uplink data channel of the second device and the configuration information of the DMRS of the uplink data channel of the second device to the second device, so that the second device can perform uplink transmission of signal or data according to the configuration information, thus completing the uplink transmission configuration of the OAM communication system.

In summary, according to the method for configuring uplink transmission based on OAM in the present disclosure, the first device can receive the capability information of the second device, determine the configuration information of the uplink measurement reference signal of the second device based on the capability information and send the configuration information to the second device, in which the configuration information includes at least one of an OAM modal value of the uplink measurement reference signal or an antenna port corresponding to the OAM modal value, and send the configuration information to the second device. In this way, the uplink transmission suitable for OAM communication scenarios is completed, problems of resource configuration and mapping in uplink transmission are effectively solved, and an alternative solution is provided to enhance the applicability.

FIG. 4 is a flowchart of a method for configuring uplink transmission based on OAM according to an embodiment of the present disclosure. The method is applied to a second device. In an embodiment of the present disclosure, the second device may be a network device, such as a relay or a smart repeater, including but not limited to a Network-controlled Repeater (NCR), or a User Equipment (UE), including but not limited to an intelligent terminal, a cellular phone, a wireless device, a handset, a mobile unit, a vehicle, an on-board device, etc. The second device (a relay or a UE) completes the uplink transmission configuration by interacting with the first device (a base station).

As shown in FIG 4, the method can include the following step.

At S401, an uplink measurement reference signal is sent according to configuration information of the uplink measurement reference signal. The configuration information of the uplink measurement reference signal includes at least one of: an OAM modal value of the uplink measurement reference signal; or an antenna port corresponding to the OAM modal value.

As described in the embodiments shown in FIG 1 to FIG 3, when there is an association or binding relationship between the OAM modal value and the antenna port, the corresponding antenna port may be determined by that the second device receives the OAM modal value from the first device, or the corresponding OAM modal value may be determined by that the second device receives the antenna port from the first device. When there is no association or binding relationship between the OAM modal value and the antenna port, the second device receives both the OAM modal value and the antenna port from the first device. Please refer to the embodiments shown in FIG. 1 to FIG 3. This will not be repeated here.

The second device may generate a sending beam of the uplink measurement reference signal according to the configuration information of the received uplink measurement reference signal, so as to send the uplink measurement reference signal to the first device.

In summary, according to the method for configuring uplink transmission based on OAM in the present disclosure, the second device can send an uplink measurement reference signal according to configuration information of the uplink measurement reference signal, in which the configuration information includes at least one of an OAM modal value of the uplink measurement reference signal or an antenna port corresponding to the OAM modal value. In the present disclosure, the second device can send the uplink signal according to the configuration of the first device, which provides a method for configuring uplink transmission suitable for OAM communication scenarios, effectively solving problems of resource allocation and mapping in uplink transmission.

It is understood that the embodiments may be implemented alone or in combination with above embodiments. For example, the second device may obtain the configuration information of the uplink measurement reference signal according to the method in the above embodiments, such as sending its own capability information to the first device, receiving the configuration information sent by the first device, and sending the uplink measurement reference signal according to the configuration information, which is not limited in the present disclosure.

In a possible implementation, the method may also include: receiving configuration information of an uplink data channel and configuration information of a DMRS of the uplink data channel.

The configuration information of the uplink data channel and the configuration information of the DMRS of the uplink data channel are determined by the first device based on a measuring result of the uplink measurement reference signal.

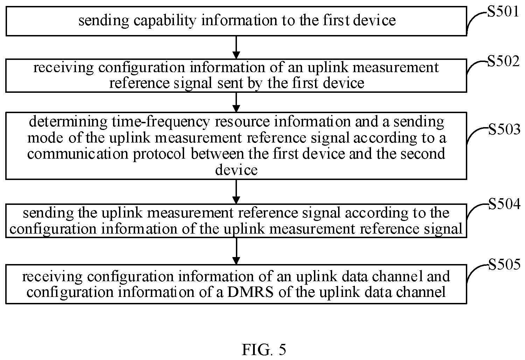

FIG. 5 is a flowchart of a method for configuring uplink transmission based on OAM according to an embodiment of the present disclosure. The method is applied to a second device. Based on the embodiments shown in FIG 4, as shown in FIG 5, the method may include the following steps.

At S501, capability information is sent to the first device. The capability information is used to assist the first device in determining the configuration information of the uplink measurement reference signal, and the capability information includes a maximum sending OAM mode number supported by the second device, and/or an identifier of each OAM mode.

It is understood that the maximum sending OAM mode number supported by the second device is related to a hardware configuration of the second device, and specifically related to an antenna element number of the second device. For example, if the second device is configured with 8 antenna elements, the maximum sending OAM mode number supported by the second device is 8.

In addition, the capability information of the second device may also include identifiers of respective modes supported by the second device, for example, the modes are numbered in integers. In the above example, numbers of 8 OAM modes may be integers from 1 to 8. The identifier is used to uniquely indicate the OAM mode, and the size or order of the identifiers does not limit the modes.

At S502, configuration information of an uplink measurement reference signal sent by the first device is received.

It is understood that the configuration information of the uplink measurement reference signal includes at least one of: an OAM modal value of the uplink measurement reference signal; or an antenna port corresponding to the OAM modal value.

At S503, time-frequency resource information and a sending mode of the uplink measurement reference signal are determined according to a communication protocol between the first device and the second device.

In an optional embodiment, the configuration information of the uplink measurement reference signal also includes time-frequency resource information and a sending mode of the uplink measurement reference signal. In this case, the first device may configure the time-frequency resource information and the sending mode of the uplink measurement reference signal, and send the time-frequency resource information and the sending mode to the second device. Then the second device may receive the information from the first device by step S502.

In another optional embodiment, the second device may determine the time-frequency resource information and the sending mode of the uplink measurement reference signal according to a communication protocol between the first device and the second device. In this case, the second device may autonomously determine the information according to the protocol.

In other words, S503 is optional. If the received configuration information in S502 includes the time-frequency resource information and the sending mode of the uplink measurement reference signal, that is, the information is configured by the first device, it is not required to implement S503. If the received configuration information in S502 does not include the time-frequency resource information and the sending mode of the uplink measurement reference signal, that is, the information is agreed via a protocol between the first device and the second device, S503 will be implemented.

In the present disclosure, the configuration information of the uplink measurement reference signal received by the second device may refer to the embodiments shown in FIG 1 to FIG 2, which will not be repeated here.

At S504, the uplink measurement reference signal is sent according to the configuration information of the uplink measurement reference signal.

In the embodiments of the present disclosure, the above S504 has the same principle as S401 in the embodiments shown in FIG. 4 and can be carried out with reference to S401, which will not be repeated here.

At S505, configuration information of an uplink data channel and configuration information of a DMRS of the uplink data channel are received. The configuration information of the uplink data channel and the configuration information of the DMRS of the uplink data channel are determined based on a measuring result of the uplink measurement reference signal.

In an embodiment of the present disclosure, the first device may determine the configuration information of the uplink data channel and the configuration information of the DMRS of the uplink data channel after measuring the uplink measurement reference signal sent by the second device, and the second device receives the configuration information of the uplink data channel and the configuration information of the DMRS of the uplink data channel sent by the first device. In this way, the uplink transmission suitable for OAM communication scenarios is completed. That is, according to the configuration information, the second device can generate a sending beam of the uplink data channel and of the DMRS of the uplink data channel, to carry out subsequent uplink transmission of signal or data.

In the present disclosure, the base station has the ability of configuring and determining, and the relay and/or terminal can send and receive the beam according to the configuration of the base station without selection or judgment, but the present disclosure does not restrict the relay and/or terminal to have certain determining ability.

In summary, according to the method for configuring uplink transmission based on OAM in the present disclosure, the second device can send its own capability information, and receive, from the first device, the configuration information of the uplink measurement reference signal determined based on the above capability information. The configuration information includes at least one of: an OAM modal value of the uplink measurement reference signal; or an antenna port corresponding to the OAM modal value. Thus, the uplink measurement reference signal is sent based on the configuration information, the first device can measure the uplink measurement reference signal, and the second device can receive the configuration information of the uplink data channel of the first device and the configuration information of the DMRS of the uplink data channel of the first device. In this way, the uplink transmission suitable for OAM communication scenarios is completed, problems of resource configuration and mapping in uplink transmission are effectively solved, and an alternative solution is provided to enhance the applicability.

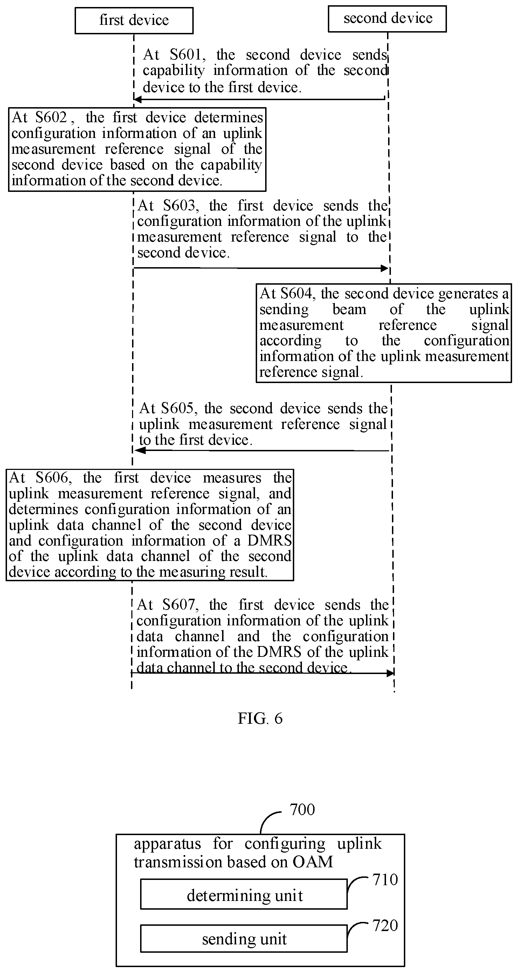

FIG 6 is a schematic diagram of a signaling interaction of a method for configuring uplink transmission based on OAM according to an embodiment of the present disclosure, which is applied to a communication system including a first device and a second device. The first device is a network device, specifically, a base station, and the second device may be a network device (such as a relay), or a UE.

As shown in FIG 6, the communication process can include the following steps.

At S601, the second device sends capability information of the second device to the first device, in which the capability information includes a maximum sending OAM mode number supported by the second device, and/or an identifier of each OAM mode.

At S602, the first device determines configuration information of an uplink measurement reference signal of the second device based on the capability information of the second device, in which the configuration information includes at least one of: an OAM modal value of the uplink measurement reference signal; or an antenna port corresponding to the OAM modal value.

At S603, the first device sends the configuration information of the uplink measurement reference signal to the second device.

At S604, the second device generates a sending beam of the uplink measurement reference signal according to the configuration information of the uplink measurement reference signal.

At S605, the second device sends the uplink measurement reference signal to the first device.

At S606, the first device measures the uplink measurement reference signal, and determines configuration information of an uplink data channel of the second device and configuration information of a DMRS of the uplink data channel of the second device according to the measuring result.

At S607, the first device sends the configuration information of the uplink data channel and the configuration information of the DMRS of the uplink data channel to the second device.

The principle of the above S601 to S607 is the same as the principle of the steps in the embodiments shown in FIG 1 to FIG 5 of the present disclosure, which can be referred to relevant description of the embodiments shown in FIG 1 to FIG 5 and will not be repeated here.

In summary, according to the method for configuring uplink transmission based on OAM in the present disclosure, the first device can determine the configuration information of the uplink measurement reference signal of the second device based on the capability information of the second device, in which the configuration information includes at least one of an OAM modal value of the uplink measurement reference signal or an antenna port corresponding to the OAM modal value; and the first device can measure the uplink measurement reference signal sent by the second device based on the configuration information, and determine the configuration information of the uplink data channel of the second device and the configuration information of the DMRS of the uplink data channel of the second device according to the measuring result. This provides a method for configuring uplink transmission suitable for OAM communication scenarios, effectively solving problems of resource allocation and mapping in uplink transmission.

In the above embodiments of the present disclosure, the methods in embodiments of the present disclosure are introduced from the perspective of the first device and the perspective of the second device. In order to realize the functions of the methods in embodiments of the present disclosure, the network device and the terminal may include a hardware structure, a software module, so as to realize the functions in the form of a hardware structure, a software module, or a hardware structure plus a software module. One of these functions can be performed in the form of a hardware structure, a software module, or a hardware structure plus a software module.

Corresponding to the methods for configuring uplink transmission based on OAM provided in the above embodiments, the present disclosure also provides an apparatus for configuring uplink transmission based on OAM. Since the apparatus for configuring uplink transmission in the embodiments of the present disclosure corresponds to the method for configuring uplink transmission based on OAM in the above embodiments, the implementations of the method for configuring uplink transmission based on OAM are also applicable to the apparatus for configuring uplink transmission based on OAM in the embodiments. This is not described in detail in the embodiments.

FIG. 7 is a block diagram of an apparatus 700 for configuring uplink transmission based on OAM according to an embodiment of the present disclosure. The apparatus 700 for configuring uplink transmission based on OAM can be applied to a first device.

As shown in FIG 7, the apparatus 700 may include: a determining unit 710, configured to determine configuration information of an uplink measurement reference signal of a second device based on capability information of the second device, in which the configuration information includes at least one of an OAM modal value of the uplink measurement reference signal or an antenna port corresponding to the OAM modal value; and a sending unit 720, configured to send the configuration information of the uplink measurement reference signal to the second device.

According to the apparatus for configuring uplink transmission based on OAM in the present disclosure, the first device can determine configuration information of the uplink measurement reference signal of the second device based on capability information of the second device, in which the configuration information includes at least one of an OAM modal value of the uplink measurement reference signal or an antenna port corresponding to the OAM modal value; and send the configuration information of the uplink measurement reference signal. This provides a method for configuring uplink transmission suitable for OAM communication scenarios, effectively solving problems of resource allocation and mapping in uplink transmission.

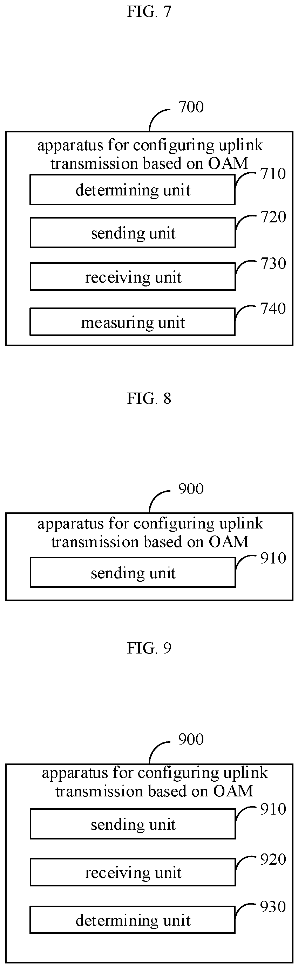

In some embodiments, as shown in FIG. 8, the apparatus 700 also includes a receiving unit 730, configured to receive capability information of the second device, in which the capability information includes a maximum sending OAM mode number supported by the second device, and/or an identifier of each OAM mode.

In some embodiments, the OAM modal value of the uplink measurement reference signal includes: an identifier of an OAM mode, in which the identifier is obtained from the capability information of the second device; and/or an index of a mode set formed by two or more OAM modes.

In some embodiments, the configuration information of the uplink measurement reference signal also includes time-frequency resource information and a sending mode of the uplink measurement reference signal, in which the time-frequency resource information and the sending mode are configured by the first device or determined according to a communication protocol between the first device and the second device.

In some embodiments, the sending mode includes a cyclical sending mode, a semi-cyclical sending mode, or a non-cyclical sending mode, in which the cyclical sending mode is sending by the second device at a predetermined cycle, the semi-cyclical sending mode is sending by the second device at a predetermined cycle after receiving an activation signaling sent by the first device; and the non-cyclical sending mode is sending once by the second device in response to an activation signaling sent by the first device.

In some embodiments, the receiving unit 730 is also configured to receive the uplink measurement reference signal sent by the second device, and the apparatus 700 also includes a measuring unit 740, configured to measure the uplink measurement reference signal and determine the configuration information of the uplink data channel of the second device and the configuration information of the DMRS of the uplink data channel of the second device according to the measuring result.

In some embodiments, the measuring unit 740 is specifically configured to calculate channel information of the uplink measurement reference signal, in which the channel information includes at least one of an SINR, an RSRP, an RSRQ, and an RSSI.

In some embodiments, the measuring unit 740 is further configured to use configuration information corresponding to the uplink measurement reference signal whose measuring result meet a communication condition as the configuration information of the uplink data channel of the second device and the configuration information of the DMRS of the uplink data channel of the second device.

In some embodiments, the sending unit 720 is further configured to send the configuration information of the uplink data channel of the second device and the configuration information of the DMRS of the uplink data channel of the second device to the second device.

In summary, according to the apparatus for configuring uplink transmission based on OAM in the present disclosure, the first device can receive the capability information of the second device, determine the configuration information of the uplink measurement reference signal of the second device based on the capability information and send the configuration information to the second device, in which the configuration information includes at least one of an OAM modal value of the uplink measurement reference signal or an antenna port corresponding to the OAM modal value, and determine the configuration information of the uplink data channel of the second device and the configuration information of the DMRS of the uplink data channel of the second device by receiving the uplink measurement reference signal sent by the second device according to the configuration information and measuring the uplink measurement reference signal. In this way, the uplink transmission suitable for OAM communication scenarios is completed, problems of resource configuration and mapping in uplink transmission are effectively solved, and an alternative solution is provided to enhance the applicability.

FIG 9 is a block diagram of an apparatus for configuring uplink transmission based on OAM according to an embodiment of the present disclosure. The apparatus 900 for configuring uplink transmission based on OAM can be applied to a second device.

As shown in FIG 8, the apparatus 900 may include: a sending unit 910, configured to send an uplink measurement reference signal according to configuration information of the uplink measurement reference signal, in which the configuration information of the uplink measurement reference signal includes at least one of an OAM modal value of the uplink measurement reference signal or an antenna port corresponding to the OAM modal value.

According to the apparatus for configuring uplink transmission based on OAM in embodiments of the present disclosure, the second device may send the uplink measurement reference signal according to the configuration information of the uplink measurement reference signal, in which the configuration information of the uplink measurement reference signal includes at least one of an OAM modal value of the uplink measurement reference signal or an antenna port corresponding to the OAM modal value. This provides a method for configuring uplink transmission suitable for OAM communication scenarios, effectively solving problems of resource allocation and mapping in uplink transmission.

In some embodiments, as shown in FIG 10, the configuration information of the uplink measurement reference signal also includes time-frequency resource information and a sending mode of the uplink measurement reference signal. The apparatus 900 also includes a receiving unit 920, configured to receive the configuration information of the uplink measurement reference signal sent by a first device.

In some embodiments, the configuration information of the uplink measurement reference signal also includes time-frequency resource information and a sending mode of the uplink measurement reference signal. The receiving unit 820 is further configured to receive an OAM modal value of the uplink measurement reference signal sent by the first device, and/or an antenna port corresponding to the OAM modal value. The apparatus 800 also includes a determining unit 930, configured to determine the time-frequency resource information and the sending mode of the uplink measurement reference signal according to a communication protocol between the first device and the second device.

In some embodiments, the sending mode includes a cyclical sending mode, a semi-cyclical sending mode, or a non-cyclical sending mode, in which the cyclical sending mode is sending by the second device at a predetermined cycle, the semi-cyclical sending mode is sending by the second device at a predetermined cycle after receiving an activation signaling sent by the first device; and the non-cyclical sending mode is sending once by the second device in response to an activation signaling sent by the first device.

In some embodiments, the sending unit 910 is further configured to send capability information to the first device, in which the capability information is used to assist the first device in determining the configuration information of the uplink measurement reference signal, and the capability information includes a maximum sending OAM mode number supported by the second device, and/or an identifier of each OAM mode.

In some embodiments, the receiving unit 920 is further configured to receive configuration information of an uplink data channel and configuration information of a DMRS of the uplink data channel, in which the configuration information of the uplink data channel and the configuration information of the DMRS of the uplink data channel are determined based on a measuring result of the uplink measurement reference signal.

In summary, according to the apparatus for configuring uplink transmission based on OAM in the present disclosure, the second device may send its own capability information, and receive, from the first device, the configuration information of the uplink measurement reference signal determined based on the above capability information. The configuration information includes at least one of an OAM modal value of the uplink measurement reference signal or an antenna port corresponding to the OAM modal value. Thus, the uplink measurement reference signal is sent based on the configuration information, the first device can measure the uplink measurement reference signal, and the second device can receive the configuration information of the uplink data channel of the first device and the configuration information of the DMRS of the uplink data channel of the first device. In this way, the uplink transmission suitable for OAM communication scenarios is completed, problems of resource configuration and mapping in uplink transmission are effectively solved, and an alternative solution is provided to enhance the applicability.

The embodiments of the present disclosure also provide a communication system, which includes the apparatuses for configuring uplink transmission based on OAM shown in the embodiments of FIG. 7 to FIG. 10, for performing the methods for configuring uplink transmission based on OAM shown in the embodiments of FIG 1 to FIG 6.

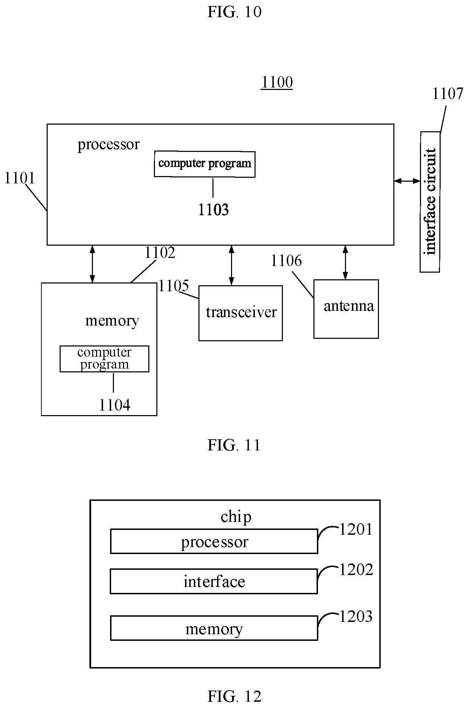

Please refer to FIG 11, which is a block diagram of a communication device 1100 according to an embodiment of the present disclosure. The communication device 1100 may be a network device, a user equipment, or a chip, a chip system, or a processor, etc., that supports the network device to realize the above method, or a chip, a chip system, or a processor, etc., that supports the user equipment to realize the above method. The device can be used to realize the method in the method embodiments. For details, please refer to the description in the method embodiments.

The communication device 1100 may include one or more processors 1101. The processor 1101 can be a general-purpose processor or a special-purpose processor, for example, a baseband processor or a central processing unit. The baseband processor can be used to process the communication protocol and communication data, and the central processing unit can be used to control the communication device (such as a base station, a baseband chip, a terminal, a terminal chip, a DU or CU, etc.), execute the computer program, and process the data of the computer program.

Optionally, the communication device 1100 may also include one or more memories 1102 for storing a computer program 1104. When the computer program 1104 is executed by the processor 1101, the communication device 1100 is caused to perform the method in the above method embodiments. Optionally, data may also be stored in the memory 1102. The communication device 1100 and the memory 1102 can be separate or integrated.

Optionally, the communication device 1100 may also include a transceiver 1105, and an antenna 1106. The transceiver 1105 can be called a transceiver unit, a transceiving machine, or a transceiver circuit, etc. to realize the transmitting and receiving function. The transceiver 1105 may include a receiver and a transmitter. The receiver may be called a receiving machine or a receiving circuit, etc. to realize the receiving function, and the transmitter can be called a transmitting machine or a transmitting circuit, etc. to realize the transmitting function.

Optionally, the communication device 1100 may also include one or more interface circuits 1107. The interface circuit 1107 is configured to receive code instructions and transmit the code instructions to the processor 1101. The processor 1101 runs code instructions to cause the communication device 1100 to perform the methods in the above method embodiments.

In one embodiment, the processor 1101 may include a transceiver for implementing receiving and transmitting function. For example, the transceiver can be a transceiver circuit, or an interface, or an interface circuit. The transceiver circuit, interface, or interface circuit used to implement the receiving and transmitting function can be separate or integrated. The transceiver circuit, interface, or interface circuit may be used for reading and writing code/data, or the transceiver circuit, interface, or interface circuit may be used for the transmission or transfer of signals.

In an implementation, a computer program 1103 may be stored on the processor 1101. When the computer program 1103 is running on the processor 1101, the communication device 1100 is caused to perform the methods in the above method embodiments. The computer program 1103 may be solidified in the processor 1101. In this case, the processor 1101 may be implemented by a hardware.

In an implementation, the communication device 1100 includes a circuit that can implement the sending or receiving or communicating function in the above method embodiments. The processor and transceiver in the present disclosure can be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver can also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device in the above embodiments may be a network device or a terminal (such as the terminal in the method embodiments), but the scope of the communication device in the present disclosure is not limited to this, and the structure of the communication device may not be restricted by FIG 10. The communication device can be an independent device or part of a larger device. For example, the communication device may be:
(1) an independent IC, or a chip, or a chip system or a subsystem;
(2) a collection including one or more IC, optionally, the IC collection may also include storage components for storing data and computer programs;
(3) an ASIC, such as a modem;
(4) a module embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication device can be a chip or a chip system, please refer to the structural diagram of a chip in FIG 12. The chip illustrated in FIG 12 includes a processor 1201 and an interface 1202. There may be one or more processors 1101, and there may be one or more interfaces 1102.

Optionally, the chip also includes a memory 1203 for storing necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

The present disclosure also provides a readable storage medium for storing instructions. When instructions are executed by a computer, the function of any one of the above method embodiments is implemented.

The present disclosure also provides a computer program product. When the computer program product is executed by a computer, the function of any one of the above method embodiments is implemented.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that numerical numbers like first and second in the present disclosure are only for the convenience of description, and are not used to limit the scope of the embodiments of the present disclosure, and also indicate a sequential order.

The term "at least one" in the present disclosure may also be described as one or more, and the more may be two, three, four, or more, which is not limited in the present disclosure. In the embodiment of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

As used herein, terms like "machine-readable medium" and "computer-readable medium" refer to any computer program product, device, and/or apparatus (e.g., a disk, an optical disc, a memory, a programmable logic device (PLD)) used to provide machine instructions and/or data to a programmable processor, including a machine-readable medium that receives machine instructions as a machine-readable signal. The term "machine-readable signal" refers to any signal used to provide machine instructions and/or data to a programmable processor.

The system and technologies described herein may be implemented by a computing system that includes a backend component (for example, a data server), or a computing system that includes a middleware component (for example, an application server), or a computing system that includes a front-end component (for example, a user computer with a graphical user interface or a web browser, via which the user can interact with the implementations of the system and technologies described herein), or a computing system that includes any combination of a backend component, a middleware component, or a front-end component. The components of a system can be connected to each other by means of digital data communication in any form or medium (for example, a communication network). Examples of the communication network include: a local area network (LAN), a wide area network (WAN), and an Internet.

The computer system can include a client and a server. The client and the server are generally far away from each other and usually interact via a communication network. A client-server relationship is created by computer programs that run on a corresponding computer and have a client-server relationship with each other.

It is understood that the various forms of the process shown above can be used, and steps can be reordered, added or removed. For example, the steps described in the present disclosure may be executed in parallel, in a sequential order, or in different sequences. This is not limited in the present disclosure to the extent that the desired result of the technical solution in the present disclosure is achieved.

In addition, it is understood that various embodiments of the present disclosure may be implemented individually or in combination with other embodiments if the solution allows.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the present disclosure. However, the protection scope of the present disclosure is not limited here. Changes and substitutions that may be easily considered by those skilled in the art shall be contained within the protection scope of the present disclosure. Therefore, the protection scope of the present disclosure shall be subject to the protection scope of claims.

## Claims

1. A method for configuring uplink transmission based on orbital angular momentum (OAM), performed by a first device, comprising:
determining configuration information of an uplink measurement reference signal of a second device based on capability information of the second device, wherein the configuration information comprises at least one of: an OAM modal value of the uplink measurement reference signal; or an antenna port corresponding to the OAM modal value; and
sending the configuration information of the uplink measurement reference signal to the second device.

2. The method according to claim 1, further comprising:
receiving the capability information of the second device,
wherein the capability information comprises a maximum sending OAM mode number supported by the second device, and/or an identifier of each OAM mode.

3. The method according to claim 1 or 2, wherein the OAM modal value of the uplink measurement reference signal comprises:
an identifier of an OAM mode, wherein the identifier is obtained from the capability information of the second device; and/or
an index of a mode set formed by two or more OAM modes.

4. The method according to any one of claims 1 to 3, wherein the configuration information of the uplink measurement reference signal further comprises time-frequency resource information and a sending mode of the uplink measurement reference signal, wherein the time-frequency resource information and the sending mode are configured by the first device or determined according to a communication protocol between the first device and the second device.

5. The method according to claim 4, wherein the sending mode comprises a cyclical sending mode, a semi-cyclical sending mode, or a non-cyclical sending mode, wherein
the cyclical sending mode is sending by the second device at a predetermined cycle,
the semi-cyclical sending mode is sending by the second device at a predetermined cycle after receiving an activation signaling sent by the first device; and
the non-cyclical sending mode is sending once by the second device in response to an activation signaling sent by the first device.

6. The method according to any one of claims 1 to 5, further comprising:
receiving the uplink measurement reference signal sent by the second device;
measuring the uplink measurement reference signal; and
determining configuration information of an uplink data channel of the second device and configuration information of a demodulation reference signal (DMRS) of the uplink data channel of the second device according to the measuring result.

7. The method according to claim 6, wherein measuring the uplink measurement reference signal comprises:
calculating channel information of the uplink measurement reference signal, wherein the channel information comprises at least one of a signal to interference plus noise ratio (SINR), a reference signal receiving power (RSRP), a reference signal receiving quality (RSRQ), or a received signal strength indication (RSSI).

8. The method according to claim 6 or 7, wherein determining the configuration information of the uplink data channel of the second device and the configuration information of the DMRS of the uplink data channel of the second device according to the measuring result comprises:
using configuration information corresponding to the uplink measurement reference signal whose measuring result meet a communication condition as the configuration information of the uplink data channel of the second device and the configuration information of the DMRS of the uplink data channel of the second device; and
the method further comprises:
sending the configuration information of the uplink data channel of the second device and the configuration information of the DMRS of the uplink data channel of the second device to the second device.

9. A method for configuring uplink transmission based on orbital angular momentum (OAM), performed by a second device, comprising:
sending an uplink measurement reference signal according to configuration information of the uplink measurement reference signal, wherein the configuration information of the uplink measurement reference signal comprises at least one of:
an OAM modal value of the uplink measurement reference signal; or
an antenna port corresponding to the OAM modal value.

10. The method according to claim 9, wherein the configuration information of the uplink measurement reference signal further comprises time-frequency resource information and a sending mode of the uplink measurement reference signal, and before sending the uplink measurement reference signal according to the configuration information of the uplink measurement reference signal, the method further comprises:
receiving the configuration information of the uplink measurement reference signal sent by a first device.

11. The method according to claim 9, wherein the configuration information of the uplink measurement reference signal further comprises time-frequency resource information and a sending mode of the uplink measurement reference signal, and before sending the uplink measurement reference signal according to the configuration information of the uplink measurement reference signal, the method further comprises:
receiving an OAM modal value of the uplink measurement reference signal sent by a first device, and/or an antenna port corresponding to the OAM modal value; and
determining the time-frequency resource information and the sending mode of the uplink measurement reference signal according to a communication protocol between the first device and the second device.

12. The method according to claim 10 or 11, wherein the sending mode comprises a cyclical sending mode, or a semi-cyclical sending mode, or a non-cyclical sending mode, wherein
the cyclical sending mode is sending by the second device at a predetermined cycle,
the semi-cyclical sending mode is sending by the second device at a predetermined cycle after receiving an activation signaling sent by the first device; and
the non-cyclical sending mode is sending once by the second device in response to an activation signaling sent by the first device.

13. The method according to any one of claims 9 to 12, wherein before sending the uplink measurement reference signal according to the configuration information of the uplink measurement reference signal, the method further comprises:
sending capability information to the first device,
wherein the capability information is used to assist the first device in determining the configuration information of the uplink measurement reference signal, and the capability information comprises a maximum sending OAM mode number supported by the second device, and/or an identifier of each OAM mode.

14. The method according to any one of claims 9 to 12, further comprising:
receiving configuration information of an uplink data channel and configuration information of a demodulation reference signal (DMRS) of the uplink data channel, wherein the configuration information of the uplink data channel and the configuration information of the DMRS of the uplink data channel are determined based on a measuring result of the uplink measurement reference signal.

15. An apparatus for configuring uplink transmission based on orbital angular momentum (OAM), applied to a first device, comprising:
a determining unit, configured to determine configuration information of an uplink measurement reference signal of a second device based on capability information of the second device, wherein the configuration information comprises at least one of: an OAM modal value of the uplink measurement reference signal; or an antenna port corresponding to the OAM modal value; and
a sending unit, configured to send the configuration information of the uplink measurement reference signal to the second device.

16. An apparatus for configuring uplink transmission based on orbital angular momentum (OAM), applied to a second device, comprising:
a sending unit, configured to send an uplink measurement reference signal according to configuration information of the uplink measurement reference signal, wherein the configuration information of the uplink measurement reference signal comprises at least one of:
an OAM modal value of the uplink measurement reference signal; or
an antenna port corresponding to the OAM modal value.

17. A communication system, wherein the system comprises a first device and a second device, wherein
the first device determines configuration information of an uplink measurement reference signal of the second device based on capability information of the second device, wherein the configuration information comprises at least one of: an OAM modal value of the uplink measurement reference signal, or an antenna port corresponding to the OAM modal value;
the first device sends the configuration information of the uplink measurement reference signal to the second device; and
the second device sends the uplink measurement reference signal according to the configuration information of the uplink measurement reference signal.

18. A communication device, comprising a transceiver; a memory; and a processor for respectively connecting with the transceiver and with the memory, wherein when the processor is configured to control a wireless signal receiving and sending of the transceiver by executing computer-executable instructions on the memory, to implement the method according to any of claims 1 to 14.

19. A computer storage medium for storing computer executable instructions; wherein when the computer executable instructions are executed by a processor, the method according to any of claims 1 to 14 is implemented.
